# EUROPÄISCHE PATENTSCHRIFT

(11) **EP 2 623 640 B1**
(45) Veröffentlichungstag und Bekanntmachung des Hinweises auf die Patenterteilung: **09.01.2019**
(21) Anmeldenummer: 12153648.6
(22) Anmeldetag: 02.02.2012
(51) Int. Cl.: C25B 1/10, C25B 15/08

(54) **Verfahren zum Betrieb eines Elektrolyseurs**
Method for operating an electrolyser
Procédé de fonctionnement d'un électrolyseur

(43) Veröffentlichungstag der Anmeldung: 07.08.2013
(73) Patentinhaber: Siemens Aktiengesellschaft, 80333 München (DE)
(72) Erfinder: Hammer, Thomas, 91334 Hemhofen (DE); Straub, Werner, 91093 Hessdorf (DE); Most, Dieter, 91052 Erlangen (DE); Schäfer, Jochen, 90408 Nürnberg (DE); Tackenberg, Martin, 91301 Forchheim (DE); Datz, Armin, 91099 Poxdorf (DE); Dennerlein, Klaus, 91058 Erlangen (DE); Huber, Norbert, 91052 Erlangen (DE); Reiner, Andreas, 91083 Baiersdorf (DE); Straub, Jochen, 91054 Erlangen (DE)

(56) Entgegenhaltungen:
- EP-A2- 0 084 815
- CH-A- 137 203
- US-A1- 2006 053 792
- US-A1- 2009 322 090

## Beschreibung

Die Erfindung betrifft ein Verfahren zum Betrieb eines Elektrolyseurs zum Erzeugen von Wasserstoff und Sauerstoff durch Zerlegung von Wasser.

Die Zerlegung von Wasser zu Wasserstoff und Sauerstoff mittels Elektrolyse eröffnet die Möglichkeit überschüssigen Strom in Form von Wasserstoff oder Sauerstoff zu speichern. Die eingebrachte elektrische Energie findet sich nach der Umsetzung zum größten Teil in der chemischen Energie der Produkte Wasserstoff und Sauerstoff wieder. Jedoch entstehen im Elektrolyseprozess neben den Produkten Wasserstoff und Sauerstoff auch Verluste, die in Form von Reaktionswärme anfallen.

Der Elektrolyseprozess wird mit Frischwasser versorgt, wobei es sich in der Regel um vollentsalztes, insbesondere destilliertes Wasser handelt. Um eine Bedeckung der Elektrodenoberfläche des Elektrolyseurs mit Mineralien und sonstige Verunreinigungen zu verhindern, wird selbst Leitungswasser vor der Zufuhr zum Elektrolyseur gereinigt und deionisiert. Um Korrosion und Katalysatordeaktivierung zu vermeiden, darf im Wasser außerdem kein Chlorid enthalten sein. Beim Betrieb des Elektrolyseurs wird das deionisierte Prozesswasser nur teilweise zerlegt, ein Großteil des Prozesswassers verbleibt in einem Prozesswasserkreislauf. Es muss jedoch zusätzliches deionisiertes Wasser nachgeliefert werden, um den Verbrauch am Prozesswasser im Elektrolyseuer zu kompensieren.

Deionisiertes Wasser, welches in einem Elektrolyseur als Prozesswasser verwendet wird, muss vorher aus einer Rohwasserquelle (z.B. Leitungswasser, Flusswasser, See- aber auch Meer- oder Brackwasser) gewonnen werden. Je nach Zugang zu einer hochwertigen oder einer minderwertigen Wasserquelle geschieht dies mit hohen energetischen Kosten und apparativem Aufwand. Dies mindert den Gesamtwirkungsgrad des Elektrolyseprozesses.

Die Aufbereitung des für die Wasserstoffproduktion durch Elektrolyse benötigten Wassers erfolgt im Allgemeinen getrennt vom eigentlichen Elektrolyseprozess und wird daher auch für gewöhnlich nicht bei der Betrachtung des Wirkungsgrades des Elektrolyseprozesses berücksichtigt. Wenn ein Teil der Wasseraufbereitung außerhalb der Elektrolyseanlage erfolgt, z.B. indem Trinkwasser aus von den lokalen Stadtwerken betriebenen Trinkwasserleitungen verwendet wird, muss für dieses hochkonditionierte Wasser ein im Vergleich zur Entnahme z.B. von Flusswasser erhöhter Preis bezahlt werden. Die energetischen Kosten laufen dann beim Betreiber der Trinkwasseraufbereitung auf, anstatt in den Gesamtwirkungsgrad eingerechnet zu werden.

Der Energieverbrauch zur Bereitstellung des deionisierten und entsalzten Wassers mindert die Effizienz des Elektrolyseprozesses. Es wird dabei entweder Trinkwasser verwendet oder dort wo kein Trinkwasser verfügbar ist, müssen entsprechende Anlagen zur Aufbereitung von minderwertigem Rohwasser bereitgestellt werden. Beides erhöht die Kosten des Elektrolyseprozesses. In diesem Zusammenhang gilt es zu beachten, dass während der Elektrolyse erhebliche Mengen an elektrischer Energie in Wärmeenergie/Abwärme umgewandelt werden, die zurzeit größtenteils ungenutzt abgeführt werden.

Aus der DE 10 2005 011 316 A1 ist es beispielsweise bekannt, die Wärme der im Elektrolyseur erzeugten Wasserstoff- und Sauerstoffströme an das für die Elektrolyse benötigte Wasser zum Vorwärmen abzugeben.

Weitere Elektrolysesysteme und Prozesse sind bekannt aus CH 137 203 A, US 2006/0053792 A1, US 2009/0322090 A1 und Der Erfindung liegt die Aufgabe zugrunde, die Effizienz eines Elektrolyseprozesses zu steigern.

Die Aufgabe wird erfindungsgemäß gelöst durch ein Verfahren zum Betrieb eines Elektrolyseurs zum Erzeugen von Wasserstoff und Sauerstoff durch Zerlegung von Wasser, wobei
- im Elektrolyseur erzeugte Abwärme in einem Wärmeträgermedium gespeichert wird,
- wobei als Wärmeträgermedium Rohwasser verwendet wird, welches zunächst in einer Wasseraufbereitungsanlage vorgewärmt wird und anschließend dem Elektrolyseur zugeführt wird, wobei das Rohwasser im Elektrolyseur erhitzt wird,
- das Wärmeträgermedium bzw. Rohwasser zurück in die Wasseraufbereitungsanlage geführt wird, und
- in der Wasseraufbereitungsanlage mittels der Abwärme aus Rohwasser deionisiertes Wasser hergestellt wird.

Die Erfindung basiert auf der Idee die Abwärme, die im Elektrolyseur bei der Umwandlung von elektrischer Energie in die Produkte Wasserstoff und Sauerstoff in Form von Reaktionswärme anfällt, für die Herstellung von deionisiertem Wasser zu verwenden. Für diesen Zweck ist eine Wasseraufbereitungsanlage vorgesehen, die strömungstechnisch mit dem Elektrolyseur gekoppelt ist. Über ein Wärmeträgermedium, insbesondere eine Flüssigkeit, wird die Abwärme aus dem Elektrolyseur insbesondere kontinuierlich abgeführt und einem in der Wasseraufbereitungsanlage integrierten Wärmetauscher zugeführt. Das Wärmeträgermedium stellt somit eine Wärmequelle bei der Wärmeübertragung in der Wasseraufbereitungsanlage dar. Der Kreislauf des Wärmeträgermediums kann sowohl offen als auch geschlossen sein. In den Wärmetauscher wird zudem Rohwasser eingeleitet, welches im Rahmen eines thermischen Aufbereitungsprozesses mittels der Abwärme aus dem Elektrolyseur entsalzt und deionisiert wird. Die entscheidende Erkenntnis ist hierbei, dass die im Elektrolyseur anfallende Abwärme deutlich größer ist als die für die Wärmeaufbereitungsanlage erforderliche Menge an Wärme, so dass der Eigenverbrauch an Wasser im Elektrolyseur von der Wärmeaufbereitungsanlage überkompensiert wird. Dadurch hat man die Möglichkeit parallel Wasser auch für andere Prozesse herzustellen.

Der beschriebene Vorgang weist drei wesentliche Vorteile auf. Zum einen können dank der Speicherung der Abwärme aus dem Elektrolyseprozess im Wärmeträgermedium Kosten für den Bezug von Kühlwasser oder einer Luftkühlung während des Elektrolysebetriebs eingespart werden, da die entstehende Abwärme aus dem Elektrolyseur abgeführt wird. Zum anderen wird die Abwärme bei der thermischen Wasserbehandlung in der Wasseraufbereitungsanlage weiterverwendet, um deionisiertes Wasser herzustellen. Und zum dritten kann auf diese Weise so viel Rohwasser aufbereitet werden, dass nicht nur der Bedarf an Frischwasser für den Elektrolyseprozess abgedeckt wird, sondern auch Überschuss an aufbereitetem Wasser bleibt, das anderweitig verwendet werden kann.

Im Hinblick auf eine zweckdienliche Nutzung der im Verfahren verwendeten Betriebsmedien wird vorteilhafterweise zumindest ein Teil des in der Wasseraufbereitungsanlage deionisierten Wassers dem Elektrolyseur zugeführt. Somit ergibt sich automatisch ein bedarfsangepasster Medienstromausgleich. Wird durch den vermehrten Eintrag von elektrischer Energie viel Wasser in seine Elemente gespalten, so entsteht auch eine größere Menge an Abwärme, die wiederum in der thermischen Wasseraufbereitungsanlage zu einer erhöhten Produktion von deionisiertem Wasser führt. Zurückgeleitet kann das deioniserte Wasser den erhöhten Wasserverbrauch im Elektrolyseur decken.

Bevorzugt wird zumindest ein Teil des in der Wasseraufbereitungsanlage deionisierten Wassers remineralisiert. Durch die Remineralisierung des deionisierten Wassers kann Trinkwasser, Wasser zum Bewässern sowie Wasser für weitere industrielle Prozesse hergestellt werden.

Um den Bedarf von Prozess- oder Trinkwasser und den Bedarf von deionisiertem Wasser für den Elektrolyseur bezüglich zeitlicher Schwankungen zu entkoppeln, wird zumindest ein Teil des in der Wasseraufbereitungsanlage deionisierten Wassers zwischengespeichert. Zusätzlich wird dadurch eine gewisse Unabhängigkeit von Schwankungen der Verfügbarkeit von Rohwasser erreicht.

Zweckdienlicherweise erfolgt die Zerlegung von Wasser durch eine Membran-Elektroden-Einheit im Elektrolyseur. Eine derartige Membran-Elektroden-Einheit ist z.B. eine Polymer-Elektrolyt-Membran (PEM). Ein PEM-Elektrolyseur arbeitet bei einer Temperatur zwischen 50°C und 130°C, typischerweise in einem Temperaturbereich zwischen 70°C und 90°C. Auf diesem Temperaturniveau kann die Abwärme des Elektrolyseprozesses direkt benutzt werden, um die thermisch betriebene Wasseraufbereitungsanlage zu "befeuern". Entsprechend wird in der Wasseraufbereitungsanlage vorzugsweise eine Betriebstemperatur zwischen 50°C und 130°C, insbesondere zwischen 60°C und 100°C, insbesondere zwischen 70°C und 80°C eingestellt. Heutzutage sind Wasseraufbereitungsprozesse bekannt, die im Gegensatz zur konventionellen Destillation auch schon bei Temperaturen von 60°C bis 70°C mit sehr guter Qualität arbeiten.

Als Beispiel für einen solchen Prozess wird in der Wasseraufbereitungsanlage bevorzugt Niedertemperatur-Destillation zur Herstellung von deionisiertem Wasser angewendet. Der auf Verdunstung (d.h. der Prozess findet unterhalb der Siedetemperatur statt) und Rekondensation basierende Prozess ist z.B. in der DE 10 2008 051 731 A1 beschrieben.

Nach einer alternativen, bevorzugten Ausführung wird in der Wasseraufbereitungsanlage zur Herstellung von deionisiertem Wasser Membran-Destillation angewendet. Die Membran-Destillation ist ein thermisch betriebener Separationsprozess, bei dem eine hydrophobe Membran eine Barriere für die flüssige Phase eines Wasserstroms darstellt, während die dampfförmige Phase die Membran durchdringt. Die treibende Kraft für den Prozess bildet ein Partialdampfdruckgefälle, welches üblicherweise durch eine Temperaturdifferenz hervorgerufen wird.

Vorzugsweise wird der Elektrolyseur autark in Bezug auf eine Trinkwasserversorgung betrieben, so dass die Elektrolyse abseits von einem Anschluss an einer hochwertigen TrinkwasserVersorgung stattfindet. Mit Trinkwasserversorgung ist hier eine Leitungswasserversorgung bezeichnet, die insbesondere von einem lokalen Wasserversorger zur Verfügung gestellt wird.

Im Hinblick auf einen autarken Betrieb des Elektrolyseurs wird zweckdienlicherweise als Rohwasser der Wasseraufbereitungsanlage Meerwasser, industrielles oder kommunales Abwasser (z.B. aus einer Kläranlage) oder Brackwasser zugeführt. Dadurch werden auch die Infrastrukturvoraussetzungen für eine autarke Elektrolyseanlage erfüllt. Es werden dabei auch "schlechte" Wasserquellen zur Versorgung des Elektrolyseurs nutzbar gemacht. Der Elektrolyseprozess produziert ausreichend Abwärme, um so viel deionisiertes Wasser aus einer Rohwasserquelle aufzubereiten, dass nicht nur der Elektrolyseur komplett damit versorgt werden kann, sondern hochreines Wasser nach entsprechender Konditionierung für die Trinkwasserversorgung zur Verfügung stellt. Darüber hinaus produzieren Aufbereitungstechnologien wie Niedertemperatur-Destillation oder Membran-Destillation Wasser mit so hohem Reinheitsgrad (Salinität < 10 ppm), das im Gegensatz zur Verwendung von Trinkwasser eine weitere Vorkonditionierung vor dem Einsatz im Elektrolyseur nicht notwendig ist. Es gibt bereits Erfahrungen mit diesen Technologien bei der Aufbereitung von Meerwasser, Brackwasser sowie Prozesswasser in verschiedenen Industrien, so dass diese Prozesse auf eine breite Palette an Rohwasserquellen angewendet werden können.

In der Regel wird die Verlustwärme des Elektrolyseurs durch Zwangskühlung abgeführt. Dafür sind entsprechende Kühlflächen an einer Kühlvorrichtung vorgesehen. Vorteilhafterweise wird eine Kühlung des überschüssigen Prozesswassers in einer Kühlvorrichtung des Elektrolyseurs durchgeführt, die in der Wasseraufbereitungsanlage integriert ist. Indem die Kühlvorrichtung einen integralen Bestandteil der Wasseraufbereitungsanlagen bildet, wird der zusätzliche Vorteil erzielt, dass das investierte Kapital besser genutzt wird. Die Wasseraufbereitungsanlage kann dabei insbesondere durch eine Nachrüstung der Kühlvorrichtung eines bestehenden Elektrolyseurs aufgebaut werden.

Nach einer bevorzugten Ausführungsvariante wird ein Rohwasserzulauf in Abhängigkeit der Temperatur in der Wasseraufbereitungsanlage gesteuert oder geregelt. Hierfür wird die Temperatur in der Wasseraufbereitungsanlage mit Hilfe von Temperatursensoren gemessen. Der Rohwasserzulauf wird derart geregelt, dass die Betriebstemperatur in der Wasseraufbereitungsanlage einen Minimalwert, der für die Destillation des Rohwassers erforderlich ist, nicht unterschreitet und gegebenenfalls unterhalb eines Maximalwertes bleibt, bei dem die Qualität der Wasserreinigung abnimmt. Der Minimalwert hängt von der Auslegung der Wasseraufbereitungsanlage ab, wobei je niedriger der Minimalwert ist, desto größer ist der für den Gasumlauf erforderliche Volumenstrom an Wärmeträgermedium. Der Minimalwert sollte insbesondere 60° nicht unterschreiten. Der Maximalwert hängt wiederum von den im Rohwasser vorhandenen Verunreinigungen und deren Dampfdrücken als Funktion der Temperatur ab. Der Maximalwert kann dabei insbesondere höchstens so groß sein wie die Temperatur auf der Primärseite des Wärmetauschers (wenn keine zusätzlichen Heizvorrichtungen vorgesehen sind).

Nach einer weiteren bevorzugten Ausführungsvariante wird ein Fluss des Wärmeträgermediums in Abhängigkeit von einer Betriebstemperatur im Elektrolyseur gesteuert. Auch hierfür sind Temperatursensoren vorgesehen, die die Betriebstemperatur im Elektrolyseur insbesondere kontinuierlich messen. Bei Abweichungen der Temperatur im Elektrolyseur von der gewünschten Betriebstemperatur wird der Fluss des Wärmeträgermediums entsprechend angepasst.

Zusätzlich zu den Temperatursensoren können auch geeignete elektrochemische Sensoren vorgesehen sein, welche die Wasserqualität des in der Wasseraufbereitungsanlage destillierten Wassers überwachen.

Vorzugsweise wird die Menge des aufbereiteten Rohwassers in Abhängigkeit von der Menge an Abwärme aus dem Elektrolyseur geregelt. Dadurch wird gewährleistet, dass dem Elektrolyseur ausreichend Frischwasser zugeführt wird, so dass die erzeugte Abwärme abgeführt wird und dabei die Temperatur im Elektrolyseur innerhalb eines für den Elektrolyseprozess sinnvollen Temperaturbereichs insbesondere konstant bleibt.

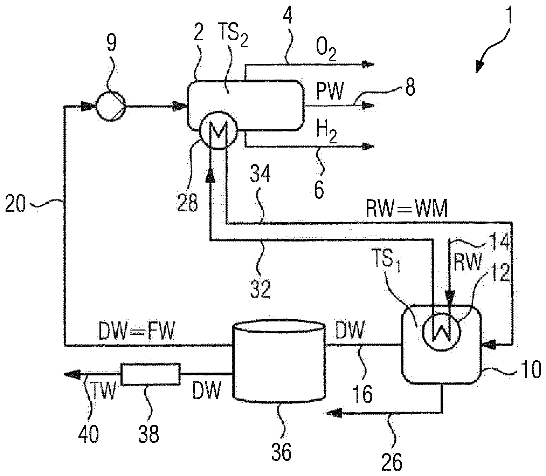

Ein Ausführungsbeispiel der Erfindung wird anhand einer Zeichnung näher erläutert. Hierin zeigt die einzige Figur schematisch und stark vereinfacht ein Ausführungsbeispiel eines Elektrolysesystems.

In der FIG ist ein Elektrolysesystem 1 umfassend einen Elektrolyseur 2 zum Erzeugen von Wasserstoff H₂ und Sauerstoff O₂ gezeigt. Im gezeigten Ausführungsbeispiel erfolgt eine Hochdruck-Elektrolyse mit Hilfe einer hier nicht näher gezeigten Polymer-Elektrolyt-Membran. Es ist jedoch auch möglich den Elektrolyseur 2 bei atmosphärischem Druck zu betrieben. Bestandteil eines PEM-Elektrolyseurs ist die protonendurchlässige Polymermembran (Proton-Exchange-Membrane), die auf beiden Seiten von mit Katalysator belegten Elektroden (Anode, Kathode) kontaktiert wird. An diese wird eine äußere Spannung angelegt und auf der Anodenseite des Elektrolyseurs 2 wird Wasser zugeführt. Beim Zersetzen des Wassers entstehen Sauerstoff, Elektronen und positiv geladene Wasserstoff-Ionen. Die Wasserstoff-Ionen diffundieren durch die protonenleitende Membran auf die Kathodenseite, wo sie mit den Elektronen aus dem äußeren Stromkreis zu Wasserstoffmolekülen H₂ kombinieren. Jedes der erzeugten Produktgase H₂ und O₂ wird in einer eigenen Gasableitung 4, 6 aus dem Elektrolyseur 2 abgeführt.

Der Elektrolyseprozess wird über eine Hochdruckpumpe 9 mit dem benötigten Frischwasser FW versorgt. Es handelt sich hierbei um vollentsalztes, destilliertes Wasser mit einer Leitfähigkeit kleiner 1 *µ*S. Der Anoden- oder Sauerstoffseitige Wasserkreislauf umspült die Membran, versorgt den elektrochemischen Prozess mit dem benötigten Wasser, das zersetzt wird, und führt neben der entstehenden Reaktionswärme auch das produzierte Sauerstoffgas ab. Während der Elektrolyse gelangt Wasser von der Anodenseite auf die Kathodenseite durch die Polymer-Elektrolyt-Membran hindurch.

Das Prozesswasser PW, welches beim Elektrolyseprozess nicht zersetzt ist, wird mit Hilfe einer Prozesswasserableitung 8 aus dem Elektrolyseur 2 abgeführt, da die Betriebstemperatur des polymerbasierten Elektrolyseurs 2 auf einen Temperaturbereich von 50°C bis 130°C beschränkt ist und somit eine kontinuierliche Abführung der im Elektrolyseur 2 entstehenden Reaktionswärme notwendig ist. Die Prozesswasserableitung 8 ist dabei Teil eines Prozesswasserkreislaufs für den Elektrolyseur 2.

Das Elektrolysesystem 1 umfasst zusätzlich eine Wasseraufbereitungsanlage 10. Die Wasseraufbereitungsanlage 10 weist einen Wärmetauscher 12 auf. Über eine Rohwasserleitung 14 wird der Wasseraufbereitungsanlage 10 Rohwasser RW, insbesondere aus einer natürlichen Quelle wie z.B. Meerwasser, Brackwasser oder Seewasser, zugeführt. Über die Rohwasserleitung 14 kann alternativ auch Wasser aus einer industriellen Anlage, kommunales Abwasser aus einer Kläranlage oder auch Trink- oder Leitungswasser zugeführt werden.

Die Wasseraufbereitungsanlage 10 ist eine Niedertemperatur-Destillationsanlage oder eine Membran-Destillationsanlage.

Das in der Aufbereitungsanlage 10 entsalzte und destillierte Wasser, hier als Frischwasser FW bezeichnet, wird anschließend über eine Deionat-Leitung 16 aus der Wasseraufbereitungsanlage 10 hinausgeleitet und einer Versorgungsleitung 20 des Elektrolyseurs 2 zugeführt. Über eine Ableitung 26 wird das beim Destillieren des Rohwassers RW anfallende Abwasser-Konzentrat aus der Wasseraufbereitungsanlage 10 entsorgt.

Die in der Wasseraufbereitungsanlage 10 herrschende Betriebstemperatur beträgt z.B. ca. 70°C. Aufgrund der Art der Wasseraufbereitungsanlage 10 ist diese Temperatur jedoch ausreichend, um das Rohwasser RW aus der Leitung 14 derart aufzubereiten, dass es sich als Prozesswasser PW für den Elektrolyseprozess eignet.

Über einen ersten Temperatursensor TS₁ wird kontinuierlich die Temperatur in der Wasseraufbereitungsanlage 10 gemessen. In Abhängigkeit dieser Temperatur wird dabei der Rohwasserzulauf RW geregelt. Hierfür sind in Bezug auf die gemessene Temperatur eine untere und eine obere Grenze bzw. ein Minimalwert und ein Maximalwert zu berücksichtigen. Wenn die Temperatur den Minimalwert von ca. 60°C erreicht hat oder unterhalb des Minimalwertes liegt, wird der Rohwasserzulauf RW reduziert oder gar unterbrochen. Bei einem deutlichen Anstieg der Temperatur in der Wasseraufbereitungsanlage 10 wird der Rohwasserzulauf RW dagegen erhöht. Der Maximalwert für die Temperatur in der Wasseraufbereitungsanlage 10 wird so festgelegt, dass das Destillat die Anforderungen an die geforderte Reinheit noch erfüllt. Bei Salzwasser ohne weitere Verunreinigungen sind Temperaturen bis 90°C tolerabel, bei Wässern mit öligen Verunreinigungen können Temperaturen unter 80°C erforderlich sein.

Ein ähnlicher Regelungsvorgang findet auch im Elektrolyseur 2 statt, dessen Betriebstemperatur durch einen weiteren Temperatursensor TS₂ gemessen wird. Der Zufluss an deionisiertem Wasser DW, weiterhin auch als Deionat bezeichnet, in den Elektrolyseur 2 wird so geregelt, dass die Betriebstemperatur im Elektrolyseur 2 einen vorgegebenen Wert, der einen einwandfreien Betrieb des Elektrolyseurs 2 gewährleistet, nicht übersteigt.

Weiterhin wird der Rohwasserzulauf RW in Abhängigkeit von der Menge an Abwärme aus dem Elektrolyseur 2 geregelt. Wird im Elektrolyseur 2 immer mehr Prozesswasser PW in seine Elemente gespalten, so entsteht auch eine vergrößerte Menge an Abwärme. Diese Abwärme führt in der Wasseraufbereitungsanlage 10 wiederum zu einer erhöhten Produktionsrate an Reinstwasser, insbesondere an Deionat DW, welches in den Elektrolyseur 2 eingeleitet wird und dort den erhöhten Wasserverbrauch decken kann.

Über die Rohwasserleitung 14 wird als Rohwasser RW z.B. Meerwasser mit einer Temperatur unterhalb 20°C zugeführt. In dem Wärmetauscher 12 wird das Rohwasser RW vorgewärmt und anschließend wird es über eine Leitung 32 einem zweiten Wärmetauscher 28, der dem Elektrolyseur 2 zugeordnet ist, zugeführt. Im Wärmetauscher 28 wird das Rohwasser RW aufgrund der Abwärme, die beim Elektrolyseprozess entsteht, erhitzt und über die Warmwasserleitung 34 zurück in die Wasseraufbereitungsanlage 10 geführt. Erst in der Wasseraufbereitungsanlage 10 in Kontakt mit Luft verdunstet das aufgeheizte Rohwasser RW in einem Verdunster und anschließend kondensiert es, so dass Deionat DW entsteht, welches über die Deionat-Leitung 16 aus der Wasseraufbereitungsanlage 10 hinausgeführt wird.

Das deionisierte Wasser oder Deionat DW wird im gezeigten Ausführungsbeispiel zunächst in einem Wassertank 36 zwischengespeichert. Über die Versorgungsleitung 20 wird ein Teil des deionisierten Wassers DW als Frischwasser FW zurück in den Elektrolyseur 2 gepumpt. Ein anderer Teil des deionisierten Wassers DW wird remineralisiert, indem es z.B. einem Kiesbett 38 zugeführt wird, so dass Trinkwasser TW hergestellt wird, welches über eine Trinkwasserleitung 40 in das städtische Trinkwasser-Versorgungsnetz eingeleitet wird oder alternativ für weitere industrielle Prozesse verwendet wird. Möglich ist auch, dass das in der Aufbereitungsanlage 10 deionisierte Wasser DW in einen Frischwasserstrom FW und einen Trinkwasserstrom TW geteilt wird, ohne dass das Deionat DW in einem Wassertank 36 zwischengespeichert wird. Anstelle der Remineralisierung im Kiesbett 38 kann außerdem eine andere Art von Aufbereitung des deionisierten Wassers DW stattfinden, so dass sich dieser Wasserstrom zumindest als Prozesswasser in einem anderen industriellen Prozess eignet.

Hierbei erfolgt eine Temperaturmessung in der Wasseraufbereitungsanlage 10 sowie im Elektrolyseur 2 und auf Grundlage der gemessenen Werte wird der Rohwasserzufluss RW geregelt (in diesem Fall stellt das Rohwasser RW ein Wärmeträgermedium WM für die Abfuhr der Abwärme aus dem Elektrolyseur 2 dar).

Das Elektrolysesystem 1 zeichnet sich dadurch aus, dass es autark in Bezug auf eine Trinkwasserversorgung ist. Es eignet sich somit für einen sogenannten Inselbetrieb. Insbesondere in den Fällen, in denen ein Teil des deionisierten Wassers DW weiter verarbeitet wird (Remineralisierung) kann die Abwärmenutzung aus dem Elektrolyseur 2 zur Entsalzung von Meerwasser und Herstellung von Trinkwasser TW in wasserarmen Gegenden in Küstennähe benutzt werden.

## Patentansprüche

1. Verfahren zum Betrieb eines Elektrolyseurs (2) zum Erzeugen von Wasserstoff und Sauerstoff durch Zerlegung von Wasser, wobei
- im Elektrolyseur (2) erzeugte Abwärme in einem Wärmeträgermedium (WM) gespeichert wird,
- wobei als Wärmeträgermedium (WM) Rohwasser (RW) verwendet wird, welches zunächst in einer Wasseraufbereitungsanlage (10) umfassend einen Wärmetauscher (28) vorgewärmt wird und anschließend dem Elektrolyseur (2) zugeführt wird, wobei das Rohwasser (RW) im Elektrolyseur (2) erhitzt wird,
- das Wärmeträgermedium (WM) bzw. Rohwasser (RW) zurück in die Wasseraufbereitungsanlage (10) geführt wird, und
- in der Wasseraufbereitungsanlage (10) mittels der Abwärme aus Rohwasser (RW) deionisiertes Wasser (DW) hergestellt wird.

2. Verfahren nach Anspruch 1,
wobei zumindest ein Teil des deionisierten Wassers (DW) dem Elektrolyseur (2) zugeführt wird.

3. Verfahren nach einem der vorhergehenden Ansprüche,
wobei zumindest ein Teil des in der Wasseraufbereitungsanlage (10) deionisierten Wassers remineralisiert wird.

4. Verfahren nach einem der vorhergehenden Ansprüche,
wobei das in der Wasseraufbereitungsanlage (10) deionisierte Wasser (DW) zwischengespeichert wird.

5. Verfahren nach einem der vorhergehenden Ansprüche,
wobei die Zerlegung von Wasser durch eine Membran-Elektroden-Einheit erfolgt.

6. Verfahren nach einem der vorhergehenden Ansprüche,
wobei in der Wasseraufbereitungsanlage (10) eine Betriebstemperatur zwischen 50°C und 130°C, insbesondere zwischen 60°C und 100°C, insbesondere zwischen 70°C und 80°C, eingestellt wird.

7. Verfahren nach Anspruch 6,
wobei zur Herstellung von deionisiertem Wasser (DW) in der Wasseraufbereitungsanlage (10) Niedertemperatur-Destillation angewendet wird.

8. Verfahren nach Anspruch 6,
wobei zur Herstellung von deionisiertem Wasser (DW) in der Wasseraufbereitungsanlage (10) Membran-Destillation angewendet wird.

9. Verfahren nach einem der vorhergehenden Ansprüche,
wobei der Elektrolyseur (2) autark in Bezug auf eine Trinkwasserversorgung betrieben wird.

10. Verfahren nach einem der vorhergehenden Ansprüche,
wobei der Wasseraufbereitungsanlage (10) als Rohwasser (RW) Meerwasser, industrielles oder kommunales Abwasser oder Brackwasser zugeführt wird.

11. Verfahren nach einem der vorhergehenden Ansprüche,
wobei eine Kühlung des überschüssigen Prozesswassers in einer Kühlvorrichtung (12) des Elektrolyseurs (2) durchgeführt wird, die in der Wasseraufbereitungsanlage (10) integriert ist.

12. Verfahren nach einem der vorhergehenden Ansprüche,
wobei ein Rohwasserzulauf (RW) in Abhängigkeit der Temperatur in der Wasseraufbereitungsanlage (10) geregelt wird.

13. Verfahren nach einem der vorhergehenden Ansprüche,
wobei ein Fluss des Wärmeträgermediums (WM) in Abhängigkeit einer Betriebstemperatur des Elektrolyseurs (2) geregelt wird.

14. Verfahren nach einem der vorhergehenden Ansprüche,
wobei die Menge des aufbereiteten Rohwassers (RW) in Abhängigkeit von der Menge an Abwärme aus dem Elektrolyseur (2) geregelt wird.

## Claims

1. Method for operating an electrolyzer (2) for generating hydrogen and oxygen by decomposing water, wherein
- waste heat produced within the electrolyzer (2) is stored in a heat transfer medium (WM);
- raw water (RW), which is first preheated in a water treatment plant (10) comprising a heat exchanger (28) and is subsequently fed to the electrolyzer (2), is used as the heat transfer medium (WM), the raw water (RW) being heated in the electrolyzer (2),
- the heat transfer medium (WM) or raw water (RW) is fed back into the water treatment plant (10), and
- deionized water (DW) is produced from raw water (RW) in the water treatment plant (10) by means of the waste heat.

2. Method according to Claim 1,
wherein at least part of the deionized water (DW) is fed to the electrolyzer (2).

3. Method according to one of the preceding claims,
wherein at least part of the water deionized in the water treatment plant (10) is re-mineralized.

4. Method according to one of the preceding claims,
wherein the water (DW) deionized in the water treatment plant (10) is buffer-stored.

5. Method according to one of the preceding claims,
wherein the decomposing of water is performed by a membrane electrode unit.

6. Method according to one of the preceding claims,
wherein an operating temperature of between 50°C and 130°C, in particular between 60°C and 100°C, in particular between 70°C and 80°C, is set in the water treatment plant (10).

7. Method according to Claim 6,
wherein low-temperature distillation is used for producing deionized water (DW) in the water treatment plant (10).

8. Method according to Claim 6,
wherein membrane distillation is used for producing deionized water (DW) in the water treatment plant (10).

9. Method according to one of the preceding claims,
wherein the electrolyzer (2) is operated autonomously with respect to a drinking water supply.

10. Method according to one of the preceding claims,
wherein the water treatment plant (10) is fed seawater, industrial or municipal wastewater or brackish water as raw water (RW).

11. Method according to one of the preceding claims,
wherein the cooling of the excess process water is carried out in a cooling device (12) of the electrolyzer (2) that is integrated in the water treatment plant (10).

12. Method according to one of the preceding claims,
wherein a raw water feed (RW) is controlled in dependence on the temperature in the water treatment plant (10).

13. Method according to one of the preceding claims,
wherein a flow of the heat transfer medium (WM) is controlled in dependence on an operating temperature of the electrolyzer (2) .

14. Method according to one of the preceding claims,
wherein the amount of raw water (RW) that is treated is controlled in dependence on the amount of waste heat from the electrolyzer (2).

## Revendications

1. Procédé pour faire fonctionner un électrolyseur (2) de production d'hydrogène et d'oxygène par décomposition de l'eau, dans lequel
- on emmagasine de la chaleur perdue produite dans l'électrolyseur (2) dans un fluide (WM) caloporteur,
- dans lequel on utilise, comme fluide (WM) caloporteur, de l'eau (RW) brute que l'on préchauffe d'abord dans une installation (10) de traitement de l'eau, comprenant un échangeur de chaleur (28), et que l'on envoie ensuite à l'électrolyseur (2), l'eau (RW) brute s'échauffant dans l'électrolyseur (2),
- on renvoie le fluide (WM) caloporteur ou l'eau (RW) brute à l'installation (10) de traitement de l'eau, et
- on produit de l'eau (DW) déminéralisée dans l'installation (10) de traitement de l'eau au moyen de la chaleur perdue provenant de l'eau (RW) brute.

2. Procédé suivant la revendication 1,
dans lequel on envoie au moins une partie de l'eau (DW) déminéralisée à l'électrolyseur (2).

3. Procédé suivant l'une des revendications précédentes,
dans lequel on reminéralise au moins une partie de l'eau déminéralisée dans l'installation (10) de traitement de l'eau.

4. Procédé suivant l'une des revendications précédentes,
dans lequel on emmagasine intermédiairement l'eau (DW) déminéralisée dans l'installation (10) de traitement de l'eau.

5. Procédé suivant l'une des revendications précédentes,
dans lequel on effectue la décomposition de l'eau par une unité membrane-électrode.

6. Procédé suivant l'une des revendications précédentes,
dans lequel on règle, dans l'installation (10) de traitement de l'eau, une température de fonctionnement comprise entre 50°C et 130°C, notamment entre 60°C et 100°C, notamment entre 70°C et 80°C.

7. Procédé suivant la revendication 6,
dans lequel, pour produire de l'eau (DW) déminéralisée, on utilise, dans l'installation (10) de traitement de l'eau, une distillation à basse température.

8. Procédé suivant la revendication 6,
dans lequel, pour produire de l'eau (DW) déminéralisée, on utilise, dans l'installation (10) de traitement de l'eau, une distillation à membrane.

9. Procédé suivant l'une des revendications précédentes,
dans lequel on fait fonctionner l'électrolyseur (2) en autarcie par rapport à une alimentation d'eau potable.

10. Procédé suivant l'une des revendications précédentes,
dans lequel on envoie à l'installation (10) de traitement de l'eau, comme eau (RW) brute, de l'eau de mer, de l'eau résiduelle industrielle ou urbaine ou de l'eau saumâtre.

11. Procédé suivant l'une des revendications précédentes,
dans lequel on effectue un refroidissement de l'eau de processus en excès dans un dispositif (12) de refroidissement de l'électrolyseur (2), qui est intégré à l'installation (10) de traitement de l'eau.

12. Procédé suivant l'une des revendications précédentes,
dans lequel on régule l'apport (RW) d'eau brute en fonction de la température dans l'installation (10) de traitement de l'eau.

13. Procédé suivant l'une des revendications précédentes,
dans lequel on régule un fluide (WM) caloporteur en fonction d'une température de fonctionnement de l'électrolyseur (2).

14. Procédé suivant l'une des revendications précédentes,
dans lequel on régule la quantité de l'eau (RW) brute traitée en fonction de la quantité de chaleur perdue de l'électrolyseur (2).
